# EUROPÄISCHE PATENTANMELDUNG

(11) **EP 0 828 030 A2**
(43) Veröffentlichungstag der Anmeldung: **11.03.1998**
(21) Anmeldenummer: 97114132.0
(22) Anmeldetag: 16.08.1997
(51) Int. Cl.: E02D 29/12

(54) **Kontrollschacht für extensive Dachbegrünungen und/oder Kiesstreifen**

(30) Priorität: 04.09.1996 DE 29615388 U
(71) Anmelder: AKTUAL BAUTEILE UND UMWELTSCHUTZSYSTEME GmbH & Co. KG, D-25436 Tornesch (DE)
(72) Erfinder: Siegert, Paul, 25421 Pinneberg (DE); Marrett-Fossen, Michael, Dr., 25335 Elmshorn. (DE)
(74) Vertreter: Fleck, Thomas, Dr. Dipl.-Chem.

(57) **Zusammenfassung**

Die Erfindung betrifft einen Kontrollschacht (10) für extensive Dachbegrünungen und/oder Kiesstreifen zum Schutz technischer Einrichtungen wie Abläufe, Anstauregler, Bewässerungsautomaten, Rohrdurchführungen, Wasserzapfstellen, Schlauchausläufe, Kabeldurchführungen und Steckdosen, umfassend einen Schacht mit Bodenteil und Deckel (14). Dieser weist gewisse Nachteile auf, welche dadurch behoben werden, daß der Schacht (12) eine im Querschnitt konische, nach unten sich verbreiternde und in der Draufsicht ovale Form besitzt, wobei mehrere Schächte (12) ineinandersteckbar sind.

## Beschreibung

Die Erfindung betrifft einen Kontrollschacht nach dem Oberbegriff des Anspruches 1.

Derartige Kontrollschächte sind im Stand der Technik bekannt. Kontrollschächte schützen technische Einrichtungen aller Art, wie z.B. Dachabläufe, Rohrdurchführungen, Schlauchausläufe, Kabeldurchführungen, Steckdosen und anderes. Durch solche Kontrollschächte, mit Deckein geschützt, sind diese Einrichtungen jederzeit zugänglich. Derartige Kontrollschächte gibt es bislang in runder und eckiger Form, mit senkrechten Wandungen oder mit unzureichend breitem Auflagerand/Flansch an ihrer Unterseite. Dadurch sind sie in einem Dachbegrünungsschichtaufbau nicht standfest genug. Bei Punktlast durch Betreten sind sie einerseits kippelig und andererseits besteht dabei die Gefahr der Beschädigung der Dachabdichtung infolge Kantendrucks durch die Kontrollschachtwandungen. Weiterhin werden solche Kontrollschächte selbst durch versehentliches Dagegenstossen beim Begehen oder bei Pflege- bzw. Reparaturarbeiten seitlich verschoben und durch seitliches Anstossen auch einseitig angehoben. Sie werden dadurch in ihrer Funktion stark eingeschränkt, weil sie nicht standfest genug in einem solchen Schichtaufbau aus Vegetationssubstraten oder im Kies eingebaut werden können. Häufig ist auch ihre Eigenstabilität im Hinblick auf die zu fordernde Trittfestigkeit unzureichend. Weiterhin sind die bisher bekannten Kontrollschächte Einzelkörper, die das volle Volumen ihres Körpers als Lager- oder Versandvolumen mit entsprechend aufwendigen Verpackungen erfordern.

Der Erfindung liegt deshalb die Aufgabe zugrunde, den eingangs beschriebenen Kontrollschacht derart zu verbessern, daß auf einfache Weise die bislang zutagegetretenen Unzulänglichkeiten oder Mängel behogen werden, ohne dass dadurch die Herstellkosten, der Montageaufwand, bzw. die Lager-, Verpackungs- und Transportkosten erheblich erhöht werden müssen. Diese Aufgabe wird durch den im Anspruch 1 gekennzeichneten Kontrollschacht gelöst.

Die erfindungsgemäss vorgesehene konisch Form des Kontrollschachts verbessert die Auflastwirkung auf dem gesamten Schacht und bewirkt eine hervorragende Standfestigkeit. Gleichzeitig macht diese Form den erfindungsgemässen Kontrollschacht stapelbar, wodurch 75% des Lager-, Verpakkungs- und Versandvolumens eingespart werden. Die erfindungsgemäss vorgesehene ovale Form unterstützt die Stand- und Trittfestigkeit und schafft zugleich mehr Raum für Verbindungsstellen und Armaturen, wie Leitungen oder Kabel, im Vergleich zu einem runden Schacht gleicher Grundfläche.

Weitere Vorteile und Merkmale gehen aus den Ansprüchen hervor, die auch gemeinsam mit dem Hauptanspruch von erfinderischer Bedeutung sein können.

Im folgenden wird ein bevorzugtes Ausführungsbeispiel der Erfindung anhand von Zeichnungen näher erläutert.

Es zeigt:
- Fig. 1: eine Querschnittsansicht des erfindungsgemässen Kontrollschachts, teilweise weggebrochen; und
- Fig. 2: eine Draufsicht auf den in Fig. 1 gezeigten erfindungsgemässen Kontrollschacht.

In den Figuren ist der erfindungsgemässe Kontrollschacht allgemein mit 10 bezeichnet. Er besteht aus dem eigentlichen Schacht 12, der im unteren Bereich einen integrierten, nach aussen vollständig gleichmässig umlaufenden Flansch 16 besitzt. In seinem oberen Bereich ist der erfindungsgemässe Kontrollschacht durch einen Deckel 14 abgedichtet. Der Schacht 12 besitzt eine im Querschnitt konische Form, wodurch mehrere Schächte 12 ineinandersteckbar sind, wobei die genaue Stapelhöhe 75 mm bei einem 100 mm-Schacht 12 beträgt, so dass sie zu Dreiviertel ineinandersteckbar sind. Der umlaufende Flansch 16 oder Rand ist 40 mm breit und bietet insofern Stabilität und eine ausreichende Auflagefläche. Die Bodenunterseite dieses Flansches 16 ist strukturiert, um somit einen besseren Kalt auf der Dachabdichtung bzw. der Wurzelschutzbahn zu ermöglichen. Somit kann der erfindungsgemässe Kontrollschacht 10 nicht kippeln oder losgetreten werden. Auch die entsprechende Substrat- oder Kiesauflage sorgt für einen festen Sitz des erfindungsgemässen Kontrollschachtes 10. Die strukturierte Unterseite des Flansches 16 stellt sicher, dass die erfindungsgemässen Kontrollschächte 10 auf Dachabdichtungs- und Wurzelschutzbahnen mit relativ glatter Oberfläche in Verbindung mit der Auflast rutschfest eingebaut sind.

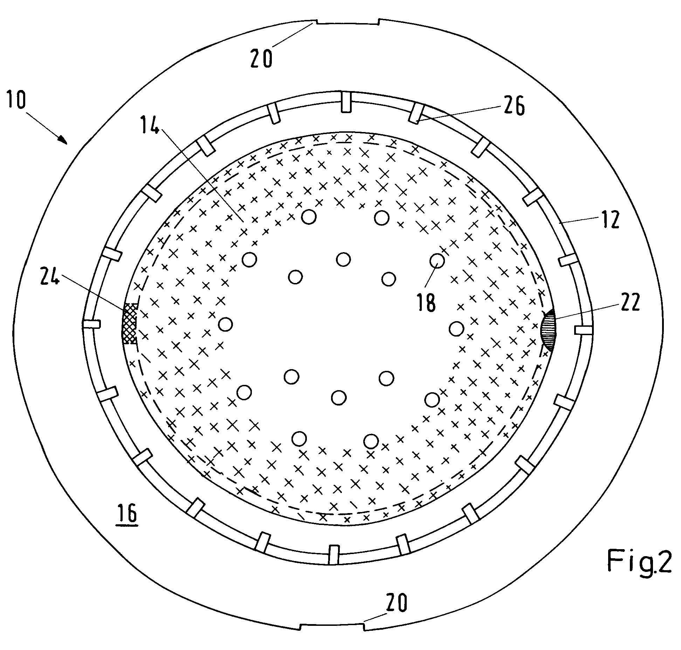

In Fig. 2 sind zwei diametral gegenüberliegende Einkerbungen 20 am Flansch 16 zu sehen, die es ermöglichen, dass beispielsweise zehn Stück von erfindungsgemässen Kontrollschächten verrutschungssicher und fest aufeinandergestapelt werden können, die dann mit einem umweltfreundlichen Spannband (nicht gezeigt) als verpackungsparende Versandeinheit verbunden werden können. Damit der Deckel 14 auf Anhieb auf den ovalen Kontrollschacht 12 aufgesetzt werden kann, ohne langes Suchen oder Probieren, hat er an beiden Schmalseiten je eine halbrunde Positionierungsmulde 22, die mit x dargestellt ist und eine Aussparung 24 in der Kontrollschachtwand, die gestrichelt dargestellt ist und das Öffnen des Deckels mit einer Münze oder dergleichen erleichtert. Ferner sind aus Fig. 2 zwanzig Schlitze 26 ersichtlich, die umlaufend gleichmässig verteilt sind und eine Grösse von 40 x 4 mm aufweisen. Durch diese Schlitze gelangt das Regenwasser aus der Dachbegrünung oder Kiesauflage in den Dachablauf. Dabei werden gröbere, an kritischen Stellen möglicherweise nicht fliessfähige Partikel zurückgehalten, also aus dem abfliessenden Wasser herausgefiltert. Ferner sind mehrere Entwässerungslöcher 18 im Deckel 14 so vorgesehen, dass sie einerseits die Trittfestigkeit des Deckels nicht einschränken, andererseits aber genügend Abflusskapazität für Bereiche haben, wo unter bestimmten Umständen oberirdischer Wasserabfluss gegeben sein muss.

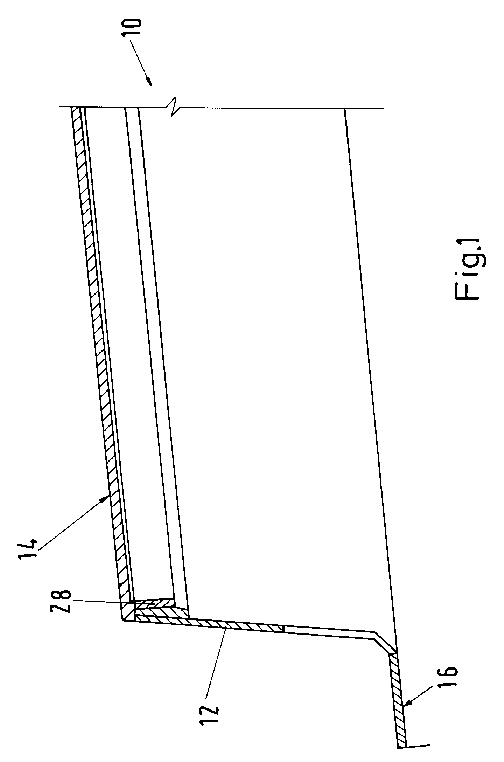

An dieser Stelle sei angemerkt, dass die gemachten Grössenangaben im Prinzip sinnvoll, jedoch nicht kritisch sind. Der Fachmann kann diese in geeignetem Rahmen ohne weiteres verändern. Ähnliches gilt für die Art des Materials. Hellgraues Polyethylen wird aufgrund der UV-Stabilität bevorzugt. Schliesslich ist noch die in Fig. 1 ersichtliche, senkrecht nach innen verlaufende Seitenwand 28 des Deckels 14 zu erwähnen, die gegenüber herkömmlichen Deckeln deutlich verdickt und somit an den konischen Verlauf des erfindungsgemässen Schachtes 12 angepasst ist. Ferner dürfte einleuchten, dass der obere Deckelrand hinsichtlich seiner Dicke so stabil ist, dass die Tritt- und Abscherfestigkeit sichergestellt ist.

## Patentansprüche

1. Kontrollschacht für extensive Dachbegrünungen und/oder Kiesstreifen zum Schutz technischer Einrichtungen wie Abläufe, Anstauregler, Bewässerungsautomaten, Rohrdurchführungen, Wasserzapfstellen, Schlauchausläufe, Kabeldurchführungen und Steckdosen, umfassend einen Schacht mit Bodenteil und Deckel, dadurch gekennzeichnet, dass der Schacht (12) eine im Querschnitt konische, nach unten sich verbreiternde und in der Draufsicht ovale Form besitzt, wobei mehrere Schächte (12) ineinandersteckbar sind.

2. Kontrollschacht nach Anspruch 1, dadurch gekennzeichnet, dass die Schächte (12) mit ihrem jeweiligen Deckel (14) zu Dreiviertel ineinandersteckbar sind.

3. Kontrollschacht nach Anspruch 1 und/oder 2, dadurch gekennzeichnet, dass der Schacht (12) einen gleichmässig breiten, umlaufenden Flansch (16) als stabile Auflagefläche besitzt.

4. Kontrollschacht nach Anspruch 3, dadurch gekennzeichnet, dass der Flansch (16) an seiner Unterseite zur Erzielung einer guten Rutschfestigkeit grob strukturiert ist.

5. Kontrollschacht nach Anspruch 1 bis 4, dadurch gekennzeichnet, dass der Deckel (14) eine Vielzahl von Entwässerungslöchern (18) besitzt.

6. Kontrollschacht nach Anspruch 1 bis 5, dadurch gekennzeichnet, dass er aus Polyethylen mit einer Wanddicke von 2,5mm besteht.

7. Kontrollschacht nach Anspruch 1 bis 6, gekennzeichnet durch eine Höhe des Schachtes (12) von 100 mm mit einem Flansch (16) von 40 mm, wobei die ovale Form Durchmesser von 200 mm und 255 mm besitzt.

8. Kontrollschacht nach Anspruch 1 bis 7, gekennzeichnet durch zwei gegenüberliegende Einkerbungen am Flansch 16.

9. Kontrollschacht nach Anspruch 1 bis 8, gekennzeichnet durch halbrunde Positionierungsmulden an den Schmalseiten des Kontrollschachtdeckels (22) und Schlitzen (24) an den Schmalseiten des Kontrollschachtes in der Kontrollschachtwand.
